# EUROPÄISCHE PATENTSCHRIFT

(11) **EP 1 319 133 B1**
(45) Veröffentlichungstag und Bekanntmachung des Hinweises auf die Patenterteilung: **05.04.2006**
(21) Anmeldenummer: 01985284.7
(22) Anmeldetag: 20.09.2001
(51) Int. Cl.: F16B 2/24, F16B 5/06, B21D 25/04

(54) **BLECHKLAMMER**
SHEET METAL CLAMP
PINCE METALLIQUE

(30) Priorität: 23.09.2000 DE 10047219
(43) Veröffentlichungstag der Anmeldung: 18.06.2003
(73) Patentinhaber: Adolf Würth GmbH & Co. KG, 74653 Künzelsau (DE)
(72) Erfinder: FRANZ, Gerhard, 74549 Wolpertshausen (DE); FRANK, Uwe, 70329 Stuttgart (DE); KOLLMAR, Frank, 74245 Löwenstein (DE); RITTER, Olaf, 74670 Forchtenberg (DE)
(74) Vertreter: Patentanwälte Ruff, Wilhelm, Beier, Dauster & Partner
(86) Internationale Anmeldenummer: PCT/EP2001/010876
(87) Internationale Veröffentlichungsnummer: WO 2002/025121

(56) Entgegenhaltungen:
- EP-A- 0 066 143
- EP-A- 0 326 473
- FR-A- 1 443 238
- FR-A- 2 732 083
- GB-A- 981 484
- US-A- 3 411 190

## Beschreibung

Die Erfindung betrifft eine Klammer, mit der man zwei oder auch mehr Blechteile vorübergehend miteinander verbinden kann, damit diese ausgerichtet und mit sonstigen Mitteln dauerhaft miteinander verbunden werden können.

Es ist bereits eine Montageklammer zum Zusammenhalten von Blechen bekannt (DE 4208400). Diese besteht aus einem Stück Einsatzstahl, in dem eine Spannfuge eingearbeitet ist, die in einer Bohrung endet. Die Spannfuge weist zwei parallele Begrenzungswände auf. Diese Klammer wird auf die beiden Bleche von ihren Kanten her aufgeschlagen, beispielsweise mit einem Hammer. Die Spannfuge muss auf die Dicke der beiden zusammen zu haltenden Bleche abgestimmt sein.

Weiterhin bekannt sind Klammern, mit denen man an einem Blech angreifen kann. Die Klemmwirkung wird durch Verschieben eines Elements bewirkt, wobei insbesondere eine Keilwirkung zum Vergrößern der Klemmkraft verwendet wird (US 4324125).

Es ist bereits eine Klammer zum Festlegen des um eine Achse herum gelegten umgeschlagenen Endes eines Bandes bekannt (EP 326473). Die Klammer ist aus Blech hergestellt und weist zwei Schenkel auf, die sich im Bereich ihrer beiden Enden einander annähern. Sie haben dort je eine nach außen abgebogene Lasche, an der mit einem Werkzeug zum Öffnen der Schenkel angegriffen werden kann.

Der Erfindung liegt die Aufgabe zu Grunde, eine einfach her-zustellende und einfach zu verwendende Möglichkeit zu schaffen, um mindestens zwei Blechteile, insbesondere ebene Blechteile, vorübergehend so aneinander zu fixieren, dass sie mit anderen Mitteln dauerhaft aneinander angebracht werden können.

Zur Lösung dieser Aufgabe schlägt die Erfindung eine Klammer mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Die Klammer ist also im Gegensatz zum Stand der Technik aus Blech hergestellt. Es gibt Verfahren, die das Herstellen solcher große Kräfte aufbringender Klammern aus Federstahl ermöglichen. Die Klammer hat zwei Schenkel, die sich im Bereich ihren freien Enden einander annähern, beispielsweise auch anliegen, ggf. unter Vorspannung. Von diesen Enden erstreken sich Laschen nach außen, die so ausgebildet sind, dass der Monteur mit einem Werkzeug an diesen Laschen angreifen kann. Mit diesem Werkzeug kann er dann die Klammer öff- nen, um sie auf beiden Blechteile aufzuschieben oder auch um sie später von diesen wieder zu entfernen. Durch die Herstellung aus Federstahl verringern sich die Herstellungskosten. Darüber hinaus ist es möglich, eine Klammer für unterschiedliche Blechstärken zu verwenden. Ein weiterer Vorteil der Klammer liegt darin, dass sie, sofern die Form der Blechteile dies zulässt, sehr weit auf die Kanten aufgeschoben werden kann. Sie nimmt also sehr wenig Platz weg, was insbesondere bei engen Platzverhältnisse von großem Vorteil ist. Die Klammer kann beispielsweise im Karosseriebau bei Kraftfahrzeugen verwendet werden, sie kann aber auch dort Anwendung finden, wo Bleche vorübergehend fixiert werden sollen.

Die Klammer kann insbesondere einstückig aus einem einzigen Stück Blech hergestellt werden. Es ist jedoch auch möglich, sie aus zwei Stücken Blech herzustellen, die dann miteinander verbunden werden, beispielsweise durch Schweißen oder Nieten.

In Weiterbildung der Erfindung kann vorgesehen sein, dass der Übergang der Schenkelenden zu den Laschen abgerundet verläuft. Dies erleichtert das Aufsetzen der Klammer auf die Blechteile von deren Kanten her.

Die Angriffsstellen an den Laschen werden erfindungsgemäß an das entsprechende Werkzeug angepasst. Insbesondere hat es sich in Weiterbildung der Erfindung als besonders sinnvoll herausgestellt, wenn die Angriffsstellen als durchgehende Löcher ausgebildet sind. Bei den hohen aufzuwendenden Kräften, um die Klammer zu öffnen, kann auf diese Weise ein Werkzeug so mit der Klammer verankert werden, dass die Gefahr eines Abrutschens oder Ablösens vermieden wird.

In nochmaliger Weiterbildung der Erfindung ist vorgesehen, dass mindestens ein Schenkel im Bereich der Berührung der beiden Schenkel mindestens einen auf den jeweils anderen Schenkel gerichteten ggf. kantigen Vorsprung aufweist, der bei geschlossener Klammer in eine Ausnehmung des jeweils anderen Schenkels eingreift. Da bei der von der Erfindung vorgeschlagenen Klammer die Spannkraft von dem Federstahl aufgebracht werden muss, kann auf diese Weise die Klemmkraft vergrößert werden. Die Klammer muß weiter geöffnet werden, als es der Dicke der beiden Bleche entspricht. Dementsprechend erhöht sich auch die Klemmkraft. Darüberhinaus können die Vorsprünge oder der eine Vorsprung dazu mitwirken, das unbeabsichtigte Lösen der Klammer von der Stelle, wo sie angesetzt ist, zu verhindern. Aus diesem Grunde wird von der Erfindung ein Vorsprung mit einer scharfen Kante bevorzugt.

In den Fällen, in denen zwei oder mehr Bleche aus empfindlicherem Material aneinander befestigt werden sollen, kann erfindungsgemäß auch ein Vorsprung ohne ein scharfe Kante verwendet werden, der beispielsweise durch eine gebogene Lasche verwirklicht wird.

Dieser mindestens eine Vorsprung lässt sich mit geringem Aufwand dadurch herstellen, dass er aus dem Stück Federstahl ausgestanzt oder ausgeschnitten und anschließend abgebogen wird. Auch die Ausnehmung in dem jeweils anderen Schenkel lässt sich durch Ausstanzen sehr einfach herstellen. Selbsverständlich sind auch andere Herstellungsmöglichkeiten gegeben.

In nochmaliger Weiterbildungen der Erfindung kann vorgesehen sein, dass die der offenen Seite der Klammer zugewandte Vorderseite der Vorsprünge bzw. des Vorsprungs mit der Mittelebene zwischen den beiden Schenkeln der Klammer einen spitzen Winkel einschließt. Dadurch kann nicht nur das Aufschieben der geöffneten Klammer erleichtert werden, sondern auch dafür gesorgt werden, dass eine Kante so orientiert ist, dass sie das unbeabsichtigte Entfemen der Klammer verhindert.

Erfindungsgemäß kann vorgesehen sein, dass die beiden Schenkel mit Ausnahme der abgerundeten Übergänge eben ausgebildet und durch einen Bogen miteinander verbunden sind. Dieser Bogen kann sich vorzugsweise über einen Winkel von mehr als 180° erstrecken.

Es ist möglich, zur Erhöhrung der Klemmkraft um diesen Bogen herum eine zweite nur teilweise ausgebildete Klammer herum anzuordnen, die also eine Art Verstärkung des Bogens bewirkt.
In Weiterbildung der Erfindung kann vorgesehen sein, dass die Laschen einen abgerundeten Umfang aufweisen, so dass die Gefahr von Verletzungen verringert wird.

Weitere Merkmale, Einzelheiten und Vorzüge der Erfindung ergeben sich aus der folgenden Beschreibung einer bevorzugten Ausführungsform der Erfindung sowie an Hand der Zeichnung. Hierbei zeigen:
Fig. 1 eine teilweise geschnittene Seitenansicht einer von der Erfindung vorgeschlagenen Klammer,
Fig. 2 eine Stimansicht der Klammer von links in Figur 1;
Fig. 3 die Draufsicht auf das ebene Stück Federstahl, aus dem die Klammer gebogen wird;
Fig.4 eine der Figur 2 entsprechende Stimansicht einer Klammer einer zweiten Ausführungsform;
Fig. 5 eine der Figur 3 entsprechende Darstellung der Klammer der zweiten Ausführungsform.
Fig. 6. eine der Figur 1 entsprechende Darstellung einer nochmals weiteren Ausführungsform:
Fig. 7 eine Verstärkung für die Ausführungsform nach Figur 1;
Fig. 8 eine weitere Ausführungsform einer Klammer nach der Erfindung;
Fig. 9 eine abgebrochene Darstellung der Befestigung zweier Klammerhälften an einander.

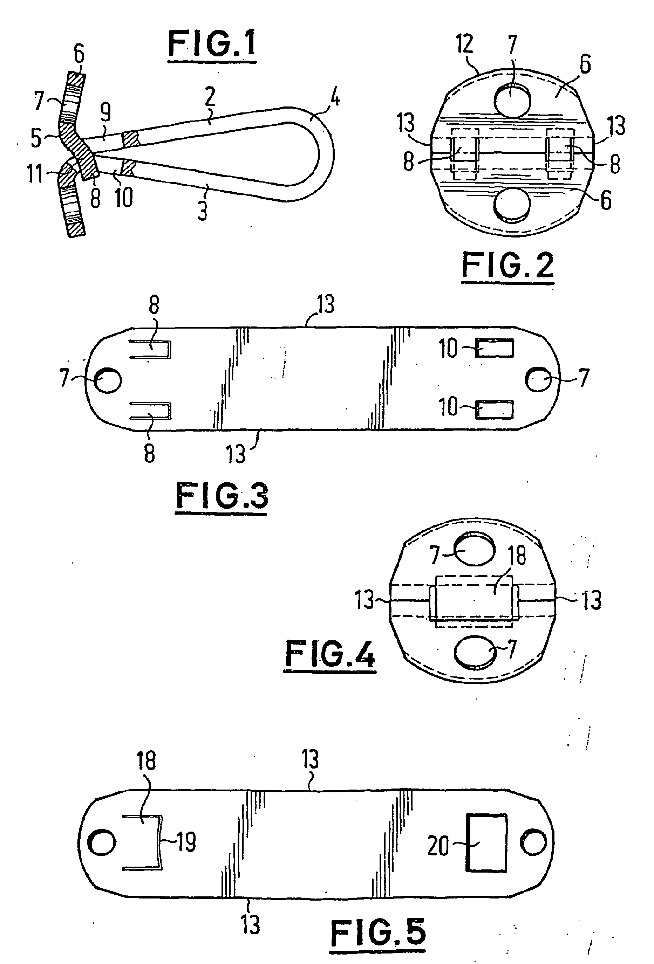

Figur 1 zeigt eine teilweise geschnittene Seitenansicht einer von der Erfindung vorgeschlagenen Klammer, mit der zwei, ggf. auch drei, ebene Blechteile vorübergehend aneinander fixiert werden können. Die Klammer ist aus einem ebenen Stück Federstahl 1 hergestellt, siehe Figur 3. Sie enthält zwei ebene Schenkel 2, 3, die im Bereich ihrer einen Enden, in Figur 1 rechts, durch einen Bogen 4 miteinander verbunden sind. Die Bogenlänge dieses Bogens ist größer als ein halber Kreisumfang, so dass die beiden Schenkel 2, 3 von ihren miteinander verbundenen Enden ausgehend in Richtung auf ihre freien Enden, in Figur 1 links, konvergieren. Im Bereich dieser erwähnten freien Enden liegen die beiden Schenkel 2, 3 aneinander an. Über einen jeweils abgerundeten Übergang 5 gehen die Enden der Schenkel 2, 3 in Laschen 6 über, die jeweils ein Loch 7 aufweisen. An dem in Figur 1 oberen Schenkel 2 ist ein Vorsprung 8 vorhanden, der aus einer lffnung 9 herausgebogen ist. Er ist so orientiert, dass der Vorsprung 8 gegen den anderen Schenkel 3 gerichtet ist und in dem geschlossenen Zustand der Klammer in eine dort vorhandene Ausnehmung 10 eingreift. Die Vorderseite 11 des Vorsprungs verläuft unter einem spitzen Winkel gegenüber einer Mittelebene zwischen den beiden Schenkeln 2, 3.

Figur 2 zeigt die Ansicht der Klammer von links in Figur 1, also eine Ansicht auf ihre den Blechen zugewandte Seite. Die beiden Laschen 6 weisen einen abgerundeten oder angenähert abgerundeten Umfang 12 auf. Die beiden Löcher 7 sind mittig zwischen den beiden Seitenkanten 13 der beiden Schenkel angeordnet. Von dieser Vorderseite aus her sind die beiden Vorsprünge 8 teilweise zu sehen, von denen in Figur 1 nur ein einziger dargestellt ist.

Figur 3 zeigt, wie bereits erwähnt, das Stück Federstahl in ebenem Zustand, aus dem die Klammer durch Biegen hergestellt wird. Im Bereich der beiden Enden des schmalen abgerundeten Rechtecks sind die beiden Löcher 7 vorhanden. Die beiden Vorsprünge 8 sind durch U-förmige Schlitze definiert. Auf der gegenüberliegenden Seite, also in Figur 3 rechts, sind gleich große Ausnehmungen 10 eingeschnitten.

Figur 4 zeigt eine der Figur 2 ähnliche Ansicht bei einer zweiten Ausführungsform einer von der Erfindung vorgeschlagenen Klammer. Statt der beiden rechts und links angeordneten Vorsprünge 8 und der entsprechend angeordneten Ausnehmungen 10 ist nur ein einziger Vorsprung 18 vorgesehen, der mittig zwischen den beiden Seitenkanten 13 der Klammer angeordnet ist. Dementsprechend zeigt auch die Figur 5 nur einem einzigen durch einen U-förmigen Schlitz definierten Vorsprung 18, dessen freie Kante 19 konkav gekrümmt ist. Die entsprechende Ausnehmung 20 ist ebenfalls nur einfach vorhanden und weist eine dem Vorsprung 18 entsprechende Größe auf. Die leicht konkave Form der freien Kante 19 des Vorsprungs 18 bildet zwei Punkte, an denen der Vorsprung in das Blechteil eindringen kann.

Die in den Figuren dargestellte Montageklammer wird folgendermaßen verwendet. Die beiden vorübergehend zu fixierenden Blechteile werden eben aufeinander gelegt. Anschließend wird mit einem Werkzeug, beispielsweise einer Zange, die Klammer geöffnet. Dies geschieht dadurch, dass die beiden Spitzen der Zange in die Löcher 7 von rechts in Figur 1 eingeführt werden. Nach dem Íffnen der Klammer wird diese auf die beiden Blechteile aufgeschoben. Dies kann soweit geschehen, bis die Kanten der Blechteile an der Innenseite des Bogens 4 anliegen. Die Klammer steht also über die Kanten der zu verbindenden Blechteile ggf. nur um die Dicke des Federstahls über. Nach dem Aufschieben wird die Zange losgelassen. Dadurch werden die Blechteile zwischen der Innenseite des die Ausnehmung 10 aufweisenden Schenkels 3 und der Vorderkante des Vorsprungs 8 bzw. der Vorsprünge 8 festgeklemmt. Die Klammer braucht sich also nicht wieder vollständig zu schließen. Dadurch erhöht sich die Spannkraft. Nach dem endgültigen Befestigen der beiden Blechteile aneinander kann die Klammer dann wieder auf die gleiche Weise gelöst werden. Da sich die Vorsprünge 8 bzw. 18 in das Blech einkrallen, ist ein einfaches Abziehen der Klammer von den Blechen nicht möglich. Auch ein Angreifen an den Laschen 6 mit einem Werkzeug, um die Klammer abzuziehen, führt nicht zur Lösung der Klammer. Diese muss tatsächlich mit einem Werkzeug soweit geöffnet werden, dass der Vorsprung 8 aus der Klemmung mit dem Blech gelöst wird.

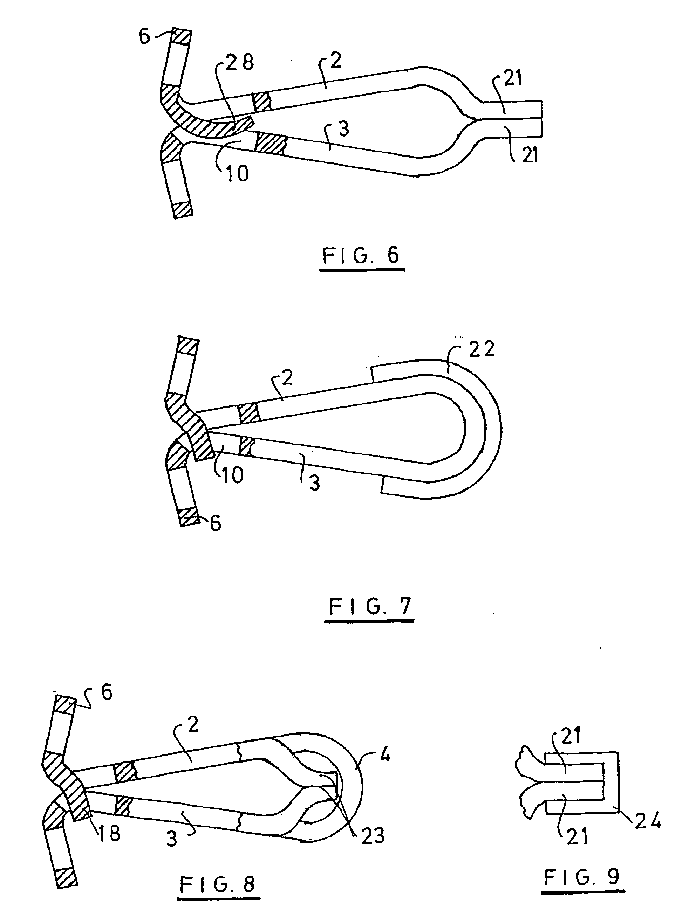

Figur 6 zeigt eine Ausführungsform, bei der die beiden Schenkel im Bereich der dem Werkstück abgewandten Ende jeweils einen ebenen Flansch 21 aufweisen. Die beiden Flansche 21 sind dann miteinander beispielsweise durch Schweißen verbunden. Auch auf diese Weise lässt sich eine Klammer mit der erforderlichen Federstärke herstellen:

Ein weiterer Unterschied zu der Ausführungsform nach Figur 1 und 4 besteht darin, dass ein Vorsprung 28 so gebildet ist, dass er zwar in die Ausnehmung 10 des anderen Schenkels 3 eingreift, sein freies Ende aber so geformt ist, dass er nicht mit einer Kante auf dem zu befestigenden Blech aufliegt. Der Vorsprung 28 greift also mit einer abgerundeten Fläche an dem festzuhaltenden Blech an. Diese Möglichkeit wird dann bevorzugt, wenn ein empfindlicheres Blech festgelegt werden soll.

Die Figur 7 zeigt eine Möglichkeit, wie die Federkraft einer ansonsten einstückigen Feder verstärkt werden kann. Um den Bogen 4 der Ausführungsform nach Figur 1 herum ist eine weitere im Querschnitt U-förmige Klammer herumgelegt. Diese Klammer 22 weist eine Bogenlänge auf, die etwas größer ist, als es einem Winkel von 180° entspricht. Dadurch ist sie an dem Bogen 4 der Klammer festgelegt. Sie verstärkt die Federkraft der Klammer. Die äußere Klammer 22 kann dabei an dem Rest der Klammer befestigt sein, beispielsweise durch Schweißen oder Nieten. Es kann aber auch ausreichen, wenn sie durch ihrer eigene Federkraft an der Klammer festgelegt ist.

Die Figur 8 zeigt eine Ausführungsform einer Klammer, bei der von beiden Schenkeln 2, 3 jeweils eine Ausstanzung nach innen abgebogen ist, die sich innerhalb des von der Klammer belegten Raumes treffen und dort als Flansche 23 miteinander verbunden sind. Die Verbindung kann durch ein Schweißen geschehen. Diese nach innen gerichteten Abbiegungen dienen der Verstärkung der Klemmkraft.

Während bei der Ausführungsform der Figur 6 die beiden Flansche 21 miteinander durch Schweißen verbunden sind, zeigt die Figur 9 eine Ausführungsform, bei der die Flansche durch eine übergeschobene Verstärkungsklammer 24 mit einander zusätzlich verbunden sind.

## Patentansprüche

1. Klammer zum vorübergehenden Verklammern mindestens zweier Bleche, mit
1.1 zwei Schenkeln (2, 3), die
1.2 aus Blech (1) hergestellt sind,
1.3 im Bereich ihrer beiden Enden sich ggf. bis zur gegenseitigen Berührung einander annähern, und
1.4 im Bereich ihrer beiden Enden je eine nach außen abgebogene Lasche (6) aufweisen, an der
1.5 als Löcher (7) ausgebildete Angriffsstellen zum Angreifen mit einem Werkzeug zum Aufspreizen der Schenkel (2, 3) angeordnet sind, wobei
1.6 mindestens ein Schenkel (2) im Bereich der Berührung der beiden Schenkel (2, 3) mindestens einen auf den jeweils anderen Schenkel (3, 2) gerichteten Vorsprung (8, 18) aufweist,
1.7 der in geschlossenem Zustand der Klammer in eine Ausnehmung (10, 20) des jeweils anderen Schenkels (2, 3) eingreift und
1.8 in auf die Bleche aufgesetztem Zustand der Klammer auf dem Blech aufliegt

2. Klammer nach Anspruch 1, bei der der Übergang der Enden der Schenkel (2, 3) in die Laschen (6) abgerundet verläuft

3. Klammer nach Anspruch 1 oder 2, bei der mindestens ein Vorsprung scharfkantig ausgebildet ist.

4. Klammer nach einem der vorhergehenden Ansprüche, bei der der Vorsprung (8, 18) durch eine Ausstanzung, einen Einschnitt dgl. und ein Abbiegen des Blechs (1) gebildet ist.

5. Klammer nach einem der vorhergehenden Ansprüche, bei der die der Öffnungsseite der Klammer zugewandte Vorderseite (11) des Vorsprungs (8, 18) mit der Mittelebene der geschlossenen Klammer einen spitzen Winkel einschließt.

6. Klammer nach einem der vorhergehenden Ansprüche, bei der die beiden Schenkel (2, 3) eben ausgebildet und durch einen Bogen (4) miteinander verbunden sind.

7. Klammer nach Anspruch 6, bei der die Länge des Bogens (4) grö-ßer als ein halber Umfang ist.

8. Klammer nach einem der vorhergehenden Ansprüche, bei der die Laschen (6) einen abgerundeten Umfang (12) aufweisen.

9. Klammer nach einem der vorhergehenden Ansprüche, aus Blech (1) hergestellt.

10. Klammer nach einem der Ansprüche 1 bis 8, bei der jeder Schenkel (2, 3) mit seiner Lasche (6) aus Blech hergestellt ist und die beiden Schenkel vorzugsweise im Bereich ihrer den Laschen abgewandten Ende miteinander verbunden sind.

11. Klammer nach einem der vorhergehenden Ansprüche, mit einer Verstärkungsklammer (22) im Bereich ihres den beiden Laschen (6) abgewandten Endes.

## Claims

1. Clamps for temporarily clamping at least two pieces of sheet metal, with
1.1 two legs (2, 3) which
1.2 are made of sheet metal (1)
1.3 and approach each other at their two ends, possibly until they contact each other, and
1.4 there is an outward-bent tab (6) at their two ends, and
1.5 there are grip sites designed as holes (7) in the tab to be gripped with a tool to spread the legs (2, 3), whereby
1.6 at least one leg (2) has at least one projection (8, 18) facing the other leg (2, 3) at the area where the two legs (2, 3) contact, and
1.7 the projection engages in a recess (10, 20) of the other leg (2, 3) when the clamp is closed, and
1.8 contacts the sheet metal when the clamps are placed on the sheet metal.

2. Clamps according to Claim 1, whereby the transition of the ends of the legs (2, 3) into the tabs (6) is rounded.

3. Clamps according to Claim 1 or 2, whereby at least one projection is at a sharp angle.

4. Clamps according to one of the prior Claims, whereby the projection (8, 18) is formed by being stamped out, cut, etc. and the sheet metal (1) being bent.

5. Clamps according to one of the prior Claims, whereby the front (11) of the projection (8, 18) facing the opening side of the clamps encloses a sharp angle with the midplane of the closed clamps.

6. Clamps according to one of the prior Claims, whereby the two legs (2, 3) are flat and are connected by an arc (4).

7. Clamps according to Claim 6, whereby the length of the arc (4) is larger than half of the circumference.

8. Clamps according to one of the prior Claims, whereby the tabs (6) have a rounded perimeter (12).

9. Clamps according to one of the prior Claims that are manufactured from sheet metal (1).

10. Clamps according to one of Claims 1 to 8, whereby each leg (2, 3) with its tab (6) is made of sheet metal, and the two legs are preferably connected at the area facing away from the tabs.

11. Clamps according to one of the prior Claims with a reinforcing clip (22) at near the ends facing away from the two tabs (6).

## Revendications

1. Agrafe pour la fixation provisoire d'au moins deux tôles, comprenant
1.1 deux côtés (2, 3) qui
1.2 sont fabriqués en tôle (1),
1.3 qui, dans la partie de leurs deux extrémités, se rapprochent l'un de l'autre, le cas échéant jusqu'à se toucher mutuellement, et
1.4 dans la partie de leurs deux extrémités, présentent chacun une languette (6) pliée vers l'extérieur, sur laquelle
1.5 sont disposés des points d'attaque formés comme des trous (7) pour la prise au moyen d'un outil afin d'écarter les côtés (2, 3),
1.6 au moins un côté (2) présentant dans la partie de contact des deux côtés (2, 3) au moins une saillie (8, 18) dirigée respectivement vers l'autre côté (3, 2),
1.7 cette saillie ayant prise, à l'état fermé de l'agrafe, dans un évidement (10, 20) de l'autre côté respectif (2, 3) et
1.8 reposant sur la tôle à l'état de l'agrafe posée sur les tôles.

2. Agrafe selon la revendication 1, dans laquelle le passage des extrémités des côtés (2, 3) en languettes (6) s'étend de manière arrondie.

3. Agrafe selon la revendication 1 ou 2, dans laquelle au moins une saillie est formée à arêtes vives.

4. Agrafe selon l'une quelconque des revendications précédentes, dans laquelle la saillie (8, 18) est formée par une découpe, une entaille ou similaire et par un cintrage de la tôle (1).

5. Agrafe selon l'une quelconque des revendications précédentes, dans laquelle un angle aigu est compris entre le côté avant (11) de la saillie, tourné vers le côté d'ouverture de l'agrafe, et le plan médian de l'agrafe fermée.

6. Agrafe selon l'une quelconque des revendications précédentes, dans laquelle les deux côtés (2, 3) sont formés de manière plane et sont raccordés entre eux par un arc (4).

7. Agrafe selon la revendication 6, dans laquelle la longueur de l'arc (4) est supérieure à une demi-circonférence.

8. Agrafe selon l'une quelconque des revendications précédentes, dans laquelle les languettes (6) présentent un pourtour arrondi (12).

9. Agrafe selon l'une quelconque des revendications précédentes, fabriquée en tôle (1).

10. Agrafe selon l'une quelconque des revendications 1 à 8, dans laquelle chaque côté (2, 3), avec sa languette (6), est fabriqué en tôle et les deux côtés sont raccordés entre eux de préférence dans la partie de leur extrémité détournée des languettes.

11. Agrafe selon l'une quelconque des revendications précédentes, comprenant une agrafe de renforcement (22) dans la partie de son extrémité détournée des deux languettes (6).
